# EUROPÄISCHE PATENTSCHRIFT

(11) **EP 3 306 699 B1**
(45) Veröffentlichungstag und Bekanntmachung des Hinweises auf die Patenterteilung: **22.08.2018**
(21) Anmeldenummer: 16193158.9
(22) Anmeldetag: 10.10.2016
(51) Int. Cl.: H01M 2/06, H01M 6/16

(54) **LITHIUM-ZELLE**
LITHIUM CELL
PILE AU LITHIUM

(43) Veröffentlichungstag der Anmeldung: 11.04.2018
(73) Patentinhaber: VARTA Microbattery GmbH, 73479 Ellwangen (DE)
(72) Erfinder: Gaugler, Winfried, 73479 Ellwangen (DE)
(74) Vertreter: Patentanwaltskanzlei Cartagena

(56) Entgegenhaltungen:
- DE-A1- 3 240 806
- JP-A- 2009 218 159

## Beschreibung

Die im Folgenden beschriebene Erfindung betrifft eine Zelle mit einer als Hohlzylinder ausgebildeten, einen Hohlraum definierenden positiven Elektrode und einer in dem Hohlraum angeordneten Elektrode entgegengesetzter Polarität.

Bei Zellen der eingangs genannten Bauart handelt es sich häufig um Zellen, bei denen ein Alkalimetall, insbesondere Lithium, als Aktivmaterial in der negativen Elektrode verwendet wird. Beispiele für Zellen mit negativer Lithium-Elektrode sind die Lithium-Thionylchlorid-Zelle, die Lithium-Schwefeldioxid-Zelle, die Lithium-Kohlenstoffmonofluorid-Zelle, die Lithium-Eisensulfid-Zelle und die Lithium-Mangandioxid-Zelle. Als positive Elektroden kommen im Fall der letztgenannten Lithium-Mangandioxid-Zelle Mangandioxid-Elektroden, Eisendisulfid-Elektroden im Fall einer Lithium-Eisensulfid-Zelle und im Fall einer Lithium-Schwefeldioxid-Zelle in Acetonitril gelöstes Schwefeldioxid (absorbiert in einer Inertelektrode) zum Einsatz. Die positiven Elektroden sind dabei in vielen Fällen als Hohlzylinder ausgebildet. Im Inneren der positiven Elektrode ist die negative Lithium-Elektrode angeordnet, ummantelt von einem Separator, der die positive Elektrode von der negativen Elektrode trennt, dabei jedoch einen lonentransport zwischen den beiden Elektronen zulässt. Der Ionentransport wird dabei in der Regel durch Einsatz eines geeigneten Elektrolyten gewährleistet. Für Zellen mit Lithium-Elektroden eignen sich insbesondere Elektrolyte, bei denen ein Salz wie beispielsweise Lithium-Hexafluorophosphat in einem organischen Lösungsmittel, beispielsweise in einem Carbonat, gelöst ist.

Die elektrische Kontaktierung der positiven Elektrode stellt in der Regel kein Problem dar. Üblicherweise steht ihre Außenseite direkt mit der Innenwand eines elektrisch leitenden Gehäuseteils in Kontakt. Die elektrische Kontaktierung kann entsprechend über dieses Gehäuseteil erfolgen. Aufwändiger ist dagegen die Kontaktierung der negativen Elektrode. Hierfür kommt klassisch ein stiftförmiger Stromableiter zum Einsatz, der an einem Ende konisch zugespitzt ist und am anderen Ende einen Flansch trägt, der bei der Gehäuseabdichtung eine Rolle spielt. Ein typisches Beispiel für einen solchen Stromableiter findet sich in der DE 3240806 A1. In der zu dieser Anmeldung gehörigen Figur ist eine Zelle dargestellt, deren Gehäuse aus zwei metallischen Halbteilen 2 und 3 zusammengesetzt ist. Eines der Halbteile ist ein Gehäusebecher 2, das andere eine flache Deckelscheibe 3, mit der der Gehäusebecher 2 verschlossen ist. Der Gehäusebecher 2 liegt unmittelbar an der positiven Elektrode 4 an. Da die zwei Halbteile 2 und 3 miteinander verschweißt sind, weisen sie die gleiche (positive) Polarität auf. Die negative Elektrode 5 wird über den nagelförmigen, zweiteiligen Ableiter 9 kontaktiert. Dieser ist durch eine Durchbrechung in der flachen Deckelscheibe 3 nach außen geführt und wird von der flachen Deckelscheibe 3 mittels zweier Dichtungselemente 11 und 13 isoliert.

Der vorliegenden Erfindung lag die Aufgabe zugrunde, eine Zelle der eingangs genannten Art bereitzustellen, die sich durch einen einfachen Aufbau und geringe Produktionskosten auszeichnet.

Diese Aufgabe wird gelöst durch die Zelle mit den Merkmalen des Anspruchs 1 und das Verfahren mit den Merkmalen des Anspruchs 7. Bevorzugte Ausführungsformen der erfindungsgemäßen Zelle sind in den abhängigen Ansprüchen 2 bis 6 angegeben. Der Wortlaut sämtlicher Ansprüche wird hiermit durch Bezugnahme zum Inhalt der vorliegenden Beschreibung gemacht.

Bei der erfindungsgemäßen Zelle handelt es sich um eine Lithium-Zelle, die wie die eingangs beschriebenen gattungsgemäßen Zellen stets eine als Hohlzylinder ausgebildete, einen Hohlraum definierende positive Elektrode sowie eine in dem Hohlraum angeordnete negative Elektrode aufweist. Zwischen der positiven und der negativen Elektrode ist ein Separator angeordnet. Sowohl der Separator als auch die Elektroden sind mit einem flüssigen Elektrolyten getränkt. Umschlossen werden die positive Elektrode samt der in dem Hohlraum angeordneten negativen Elektrode und dem Separator von einem Gehäuse. Dieses weist einen Innenraum auf, in dem die Elektroden und der Separator angeordnet sind.

Das Gehäuse umfasst einen Gehäusebecher, eine Deckelscheibe und ein elektrisch isolierendes, ringförmiges Dichtungselement, wobei der Gehäusebecher zylindrisch ausgebildet ist und einen stirnseitigen Becherboden, einen umlaufenden Gehäusemantel und eine dem Gehäuseboden gegenüberliegende stirnseitige, kreisrunde Öffnung, welche von einem kreisrunden Öffnungsrand gebildet ist, aufweist. Die Deckelscheibe ist kreisrund ausgebildet, weist einen umlaufenden Rand auf und verschließt die kreisrunde Öffnung.

In aller Regel bestehen sowohl der Gehäusebecher als auch die Deckelscheibe aus einem Metall, beispielsweise aus Stahlblech.

Die Zelle umfasst einen stiftförmigen Stromableiter für die negative Elektrode, der mit der Deckelscheibe elektrisch verbunden ist. Auf den Rand der Deckelscheibe ist das Dichtungselement aufgezogen. Diese isoliert die Deckelscheibe und den Gehäusebecher voneinander. Dadurch, dass der stiftförmige Stromableiter mit der Deckelscheibe elektrisch leitend verbunden ist, kann er in Kombination mit der Deckelscheibe als erster Stromableiter für die negative Elektrode dienen.

Es ist bevorzugt, dass die hohlzylindrisch ausgebildete positive Elektrode in unmittelbarem Kontakt mit dem Gehäusebecher steht, insbesondere großflächig direkt an diesem anliegt. Bevorzugt dient das becherförmige Gehäuseteil als zweiter Stromableiter der erfindungsgemäßen Zelle.

Die erfindungsgemäße Konstruktion weist gegenüber dem Stand der Technik große Vorteile auf. Während klassisch für den Verschluss eines Gehäusebechers und die Kontaktierung der negativen Elektrode fünf Bauteile miteinander kombiniert werden müssen, sind hierfür bei einer erfindungsgemäßen Zelle nur drei Bauteile (die Deckelscheibe, das elektrisch isolierende Dichtungselement und der stiftförmige Stromableiter) erforderlich. Hinzu kommt, dass die drei Bauteile als vormontierte Baugruppe verarbeitet werden können. All dies vereinfacht die Zellmontage und senkt die Kosten.

Da der Stromableiter elektrisch leitend mit der Deckelscheibe verbunden ist, kann die Verbindung zu der Deckelscheibe insbesondere auch durch Schweißen realisiert werden. In bevorzugten Ausführungsformen zeichnet sich die erfindungsgemäße Zelle durch mindestens eines der folgenden Merkmale aus:
- Der stiftförmige Stromableiter ist mit der Deckelscheibe verschweißt.
- Die Deckelscheibe weist eine Durchbrechung auf, durch welche der stiftförmige Stromableiter hindurchgeführt ist.
- Die Deckelscheibe und der stiftförmige Stromableiter sind über eine ringförmige Schweißlinie miteinander verbunden, die um den stiftförmigen Stromableiter herum geführt ist.

Die Durchbrechung ist nicht zwingend erforderlich, da der stiftförmige Stromableiter bei einer erfindungsgemäßen Zelle nicht aus dem Gehäuse herausgeführt werden muss. Ungeachtet dessen kann es vorteilhaft sein, den Stromableiter durch eine Durchbrechung in der Deckelscheibe hindurchzuführen und die Deckelscheibe und den stiftförmigen Stromableiter über die ringförmige Schweißlinie um den stiftförmigen Stromableiter herum miteinander zu verbinden. Die Durchbrechung kann auf diese Weise hermetisch versiegelt werden, so dass ein Elektrolytaustritt in diesem Bereich ausgeschlossen werden kann.

In einer bevorzugten Ausführungsform weist der Gehäusemantel des zylindrischen Gehäusebechers bevorzugt nicht weit unterhalb des kreisrunden Öffnungsrandes eine bevorzugt durch radialen Einzug gebildete, in den Innenraum weisende umlaufende Nase auf. Diese dient als Positionierungsmittel für die Deckelscheibe. Der Rand der Deckelscheibe sitzt dann bevorzugt mitsamt dem darauf aufgezogenen Dichtungselement auf der Nase auf.

Es ist weiterhin bevorzugt, dass der kreisrunde Öffnungsrand des Gehäusebechers über den Rand der Deckelscheibe radial nach innen umgebogen ist, so dass der Durchmesser der von ihm definierten Öffnung kleiner ist als der Durchmesser der Deckelscheibe. Eine auf der Nase aufsitzende Deckelscheibe wird dann durch den radial nach innen umgebogenen Öffnungsrand auf die Nase gedrückt und fixiert.

Der stiftförmige Stromableiter weist einen ersten, endständigen Abschnitt auf, der vollständig in der negativen Elektrode versenkt ist, und einen zweiten Abschnitt, der nicht in unmittelbarem Kontakt mit der negativen Elektrode steht.

Bevorzugt besteht der stiftförmige Stromableiter aus einem Metall, bevorzugt aus Stahl, insbesondere aus einem Edelstahl. In bevorzugten Ausführungsformen kann er auch einen bevorzugt geschlossenen Überzug aus Nickel oder aus einer Nickellegierung aufweisen.

In bevorzugten Ausführungsformen weist der stiftförmige Stromableiter zwei Enden auf, von denen eines als konisch zulaufende Spitze ausgebildet ist und das andere einen Kopf aufweist. Die konisch zulaufende Spitze weist der der stiftförmige Stromableiter bevorzugt am freien Ende des ersten endständigen Abschnitts auf. Der zweite Abschnitt befindet sich bevorzugt zwischen dem Kopf und dem ersten, endständigen Abschnitt.

Auf seiner Außenseite kann der der stiftförmige Stromableiter ein Gewinde tragen, insbesondere im Bereich des ersten, endständigen Abschnitts. Bei dem das Gewinde tragenden Bereich handelt es sich im Sinne obiger Definition bevorzugt um den ersten, endständigen Abschnitt des stiftförmigen Stromableiters. Besonders bevorzugt ist also der das Gewinde tragende Bereich des Schafts vollständig in der negativen Elektrode versenkt. Bei dem zweiten Abschnitt des Stifts handelt es sich dann bevorzugt um den Bereich des Schafts zwischen dem Kopf und dem ersten, endständigen Abschnitt.

Es kann besonders bevorzugt sein, dass die erfindungsgemäße Zelle ein Isolatorelement aufweist, das den zweiten Abschnitt zumindest bereichsweise vor einem unmittelbaren Kontakt mit dem Elektrolyten schützt.

Ein bei den Lithium-Zellen immer wieder auftretendes Problem ist das Auftreten interner Kurzschlüsse. Im Elektrolyten gelöste Lithium-Ionen können sich unter Dendritenbildung auf dem Stromableiter für die negative Elektrode abscheiden. Diese Dendritenbildung ist insbesondere dann ein Problem, wenn innerhalb einer Zelle Temperaturunterschiede auftreten, beispielsweise in Folge einer lokalen Erwärmung durch eine externe Wärmequelle oder in Folge einer lokalen Abkühlung, wenn ein Teil der Zelle in unmittelbarem Kontakt mit einem guten Wärmeleiter steht. Die Dendriten wachsen mit der Zeit und können ab einer gewissen Größe mit der positiven Elektrode in unmittelbaren Kontakt treten, was die genannten Kurzschlüsse verursacht. Das Isolatorelement unterbindet sehr wirksam die Dendritenbildung auf dem Stromableiter für die negative Elektrode.

Das Isolatorelement besteht bevorzugt aus einem elektrisch nicht leitenden Material, insbesondere aus einem elektrisch nicht leitenden Kunststoff, der undurchdringlich für den in der Zelle enthaltenen Elektrolyten ist. Bevorzugt besteht das Isolatorelement aus einem porenfreien Kunststoff. Geeignete Kunststoffe sind beispielsweise Polypropylen (PP), Polyphenylensulfid (PPS), Polyamid (PA) und Polyetheretherketon (PEEK). Gegebenenfalls können auch mehrlagige Folien verwendet werden, beispielsweise Folien aus zwei Lagen PP und einer dazwischen angeordneten Lage PA.

Besonders bevorzugt handelt es sich bei dem Isolatorelement um eine Hülse, die durch Spritzguss oder durch Tiefziehen, beispielsweise aus einer Folie aus einem der genannten Kunststoffmaterialien, gefertigt werden kann.

Idealerweise liegt das Isolatorelement eng an der Oberfläche des stiftförmigen Stromableiters in dem zweiten Abschnitt an. Zu diesem Zweck sind Größe und Form des Isolatorelements bevorzugt exakt auf die Form und Dimension des verwendeten stiftförmigen Stromableiters abgestimmt.

In einer besonders bevorzugten Ausführungsform umfasst die Zelle ein einstückiges Kunststoffteil, das sowohl die Funktion des Isolatorelements als auch die Funktion des elektrisch isolierenden Dichtungselements erfüllt. Das Kunststoffteil umfasst also bevorzugt einen hülsenartigen Abschnitt, der den zweiten Abschnitt des stiftförmigen Stromableiters zumindest bereichsweise vor einem unmittelbaren Kontakt mit dem Elektrolyten schützt, sowie weiterhin einen ringförmigen Abschnitt, der auf den Rand der Deckelscheibe aufgezogen ist und der die Deckelscheibe und den Gehäusebecher voneinander isoliert. Verbunden sind der hülsenartige Abschnitt und der ringförmige Abschnitt bevorzugt durch einen scheibenförmigen Zwischenbereich.

In einer besonders bevorzugten Ausführungsform ist der Separator als geschlossenes Behältnis ausgebildet, das die negative Elektrode vollständig umschließt und lediglich eine Durchbrechung für den stiftförmigen Stromableiter aufweist. Der Separator kann dabei mit dem Isolatorelement fest verbunden sein, beispielsweise durch Verschweißung oder Verklebung.

Bei dem Separator handelt es sich um eine poröse Hülse aus einem Kunststoff, beispielsweise aus Polypropylen. Besonders bevorzugt besteht der Separator aus einem oder mehreren Vliesstoff-Teilen.

Die beschrieben Lithium-Zelle lässt sich besonders einfach nach dem nachfolgend beschriebenen Verfahren fertigen. Auch dieses Verfahren ist Gegenstand der vorliegenden Erfindung.

Bei dem Verfahren werden eine vormontierte positive und eine vormontierte negative Baugruppe zu einer Lithium-Zelle montiert.

Die positive Baugruppe umfasst die folgenden Komponenten:
- Einen zylindrisch ausgebildeten Gehäusebecher mit einem stirnseitigen Becherboden, einem umlaufenden Gehäusemantel und einer dem Gehäuseboden gegenüberliegenden stirnseitigen, kreisrunden Öffnung, welche von einem kreisrunden Öffnungsrand gebildet ist, und
- eine als Hohlzylinder ausgebildete, einen Hohlraum definierende positive Elektrode, die in dem Gehäusebecher angeordnet ist.

Insbesondere aus produktionstechnischen Gründen wird die als Hohlzylinder ausgebildete positive Elektrode in aller Regel nicht einstückig in den Gehäusebecher eingebracht, sondern in Form von einzelnen Segmenten, die zusammengesetzt die positive Elektrode bilden. Es ist entsprechend bevorzugt, dass sich die positive Elektrode aus mindestens zwei ringförmigen Einzelsegmenten zusammensetzt, die über erste Kontaktflächen flächig aneinandergrenzen und über zweite Kontaktflächen an dem ersten Gehäuseteil anliegen. Beispielsweise können in dem Gehäusebecher zwei oder mehr ringförmige Segmente aufeinander gestapelt werden. In diesem Fall bestimmt der Innendurchmesser der ringförmigen Segmente das Volumen und den Durchmesser des Hohlraums für die negative Elektrode. Der Außendurchmesser der ringförmigen Segmente ist in der Regel exakt auf den entsprechenden Innendurchmesser des Gehäusebechers abgestimmt.

Die negative Baugruppe umfasst die folgenden Komponenten:
- Eine kreisrund ausgebildete Deckelscheibe mit einem umlaufenden Rand,
- eine negative Elektrode,
- einen Separator, der die negative Elektrode umschließt,
- einen stiftförmigen Stromableiter für die negative Elektrode, der einen endständigen Abschnitt aufweist, der vollständig in der negativen Elektrode versenkt ist, und der mit der Deckelscheibe elektrisch verbunden ist, und
- eine Dichtung, die auf den Rand der Deckelscheibe aufgezogen ist.

Bevorzugte Eigenschaften der angeführten Komponenten der positiven und der negativen Baugruppe wurden im Zusammenhang mit der erfindungsgemäßen Zelle bereits beschrieben. Auf diese wird hiermit Bezug genommen.

In besonders bevorzugten Ausführungsformen ist der stiftförmigen Stromableiter in der negativen Baugruppe bereits fest mit der Deckelscheibe verschweißt.

Zur Montage einer Lithium-Zelle wird in einem ersten Schritt der Gehäusebecher der vormontierten positiven Baugruppe mit einem geeigneten flüssigen Elektrolyten befüllt. In einem nächsten Schritt wird die vormontierte negative Baugruppe in die positive Baugruppe eingeschoben, so dass die negative Elektrode in dem von der positiven Elektrode definierten Hohlraum positioniert wird. Abschließend wird die Zelle mittels eines Bördelprozesses verschlossen.

Die beschriebenen sowie weitere Merkmale der erfindungsgemäßen Batterie ergeben sich auch aus der nun folgenden Beschreibung der in der Zeichnung dargestellten bevorzugten Ausführungsform in Verbindung mit den Unteransprüchen. Dabei können einzelne Merkmale der Erfindung für sich allein oder in Kombination miteinander verwirklicht sein. Die beschriebenen Ausführungsformen dienen lediglich zur Erläuterung und zum besseren Verständnis der Erfindung und sind in keiner Weise einschränkend zu verstehen.

### Figurenbeschreibung

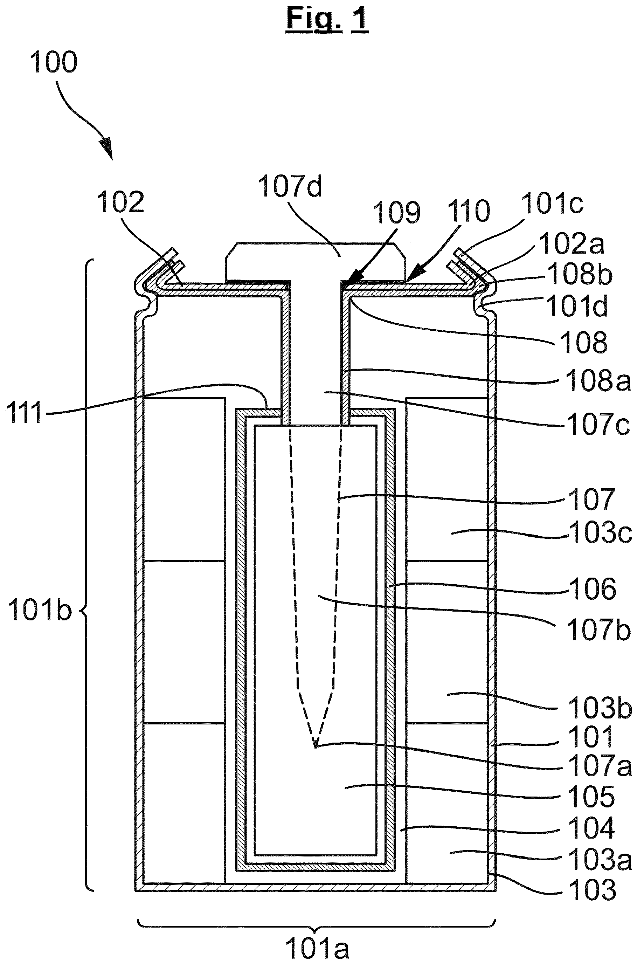

Die in **Fig. 1** dargestellte schematische Abbildung (Längsschnitt) dient der Erläuterung einer bevorzugten Ausführungsform einer erfindungsgemäßen Zelle.

Die Zelle **100** weist ein Gehäuse aus einem Gehäusebecher **101** und einer Deckelscheibe **102** auf. Der Gehäusebecher **101** umfasst einen ebenen, kreisförmig ausgebildeten Boden **101a** und einen zylindrischen Mantel **101b.** Stirnseitig weist der Gehäusebecher **101** eine kreisrunde, dem Boden **101a** gegenüber liegende, durch den Öffnungsrand **101c** definierte Öffnung auf. Diese ist mittels der Deckelscheibe **102** verschlossen.

Im Inneren des Gehäuses ist die als Hohlzylinder ausgebildete positive Elektrode **103** angeordnet, die aus drei Einzelsegmenten **103a** bis **103c** zusammengesetzt ist. Die positive Elektrode **103** besteht im Wesentlichen aus Mangandioxid. Die Einzelsegmente **103a** bis **103c** sind jeweils ringförmig ausgebildet und weisen einen jeweils identischen Außen- und Innendurchmesser auf. Innerhalb des Gehäuseteils **101** sind sie stapelförmig angeordnet und definieren in ihrem Zentrum den Hohlraum **104.** In diesem ist die aus metallischem Lithium (einem Strang aus Lithiummetall) bestehende negative Elektrode **105** angeordnet, die von einem becherförmigen Separator **106** umgeben ist. Letzterer trennt die Elektroden **103** und **105** voneinander. Bei dem Separator **106** handelt es sich um eine Hülse aus einem Vliesstoff aus Kunststofffasern, beispielsweise aus Polypropylen.

Der obere Rand **111** des Separators ist radial nach innen umgeschlagen, so dass der Separator **106** die negative Elektrode **105** von alle Seiten umkapselt.

Die innerhalb des Hohlraums **104** angeordnete negative Elektrode **105** wird durch den stiftförmigen Stromableiter **107** kontaktiert. Dieser weist einen ersten, endständigen Abschnitt **107b** auf, der vollständig in der negativen Elektrode **105** versenkt ist, sowie einen zweiten Abschnitt **107c,** der nicht unmittelbar mit der negativen Elektrode **105** in Kontakt steht. Weiterhin weist der Stromableiter **107** die konisch zulaufende Spitze **107a** und den Kopf **107d** auf.

Die Deckelscheibe **102** weist eine zentrale Durchbrechung auf, durch die der Stromableiter **107** aus dem Gehäuseinneren nach außen geführt ist. Der Stromableiter **107** und die Deckelscheibe **102** sind an mindestens einer der Positionen **109** und **110** über eine durchgehende ringförmige Schweißnaht miteinander verschweißt. Die zentrale Durchbrechung ist auf diese Weise hermetisch versiegelt, so dass ein Elektrolytaustritt in diesem Bereich ausgeschlossen ist.

Im Bereich des zweiten Abschnitts **107c** könnte im Innenraum des aus den Gehäuseteilen **101** und **102** bestehenden Gehäuses befindlicher Elektrolyt mit dem Stromableiter **107** unmittelbar in Kontakt treten. Dies wird jedoch durch das Isolatorelement **108a** wirksam verhindert. Das Isolatorelement **108a** ist eine passgenaue Hülse aus Kunststoff, die auf den Stromableiter **107** aufgezogen ist. Diese überdeckt den Stromableiter **107** ausgehend von der zentralen Durchbrechung bis zu dem Punkt, in dem er in die negative Elektrode **105** eintritt.

Die Hülse **108a** ist ein Teilabschnitt des einstückig ausgebildeten Kunststoffteils **108,** das weiterhin den ringförmigen Abschnitt **108b** umfasst. Der ringförmigen Abschnitt **108b** ist auf den Rand **112** der Deckelscheibe aufgezogen. Bei dem ringförmigen Abschnitt **108b** handelt es sich um das Dichtungselement, das die Deckelscheibe **102** und den Gehäusebecher **101** voneinander isoliert. Insgesamt erfüllt das Kunststoffteil **108** sowohl die Funktion des Isolatorelements für den Stromableiter **107** als auch die Funktion des elektrisch isolierenden Dichtungselements für die Deckelscheibe **102** und den Gehäusebecher **101.**

Das Kunststoffteil 108 kann insbesondere durch einen Spritzgussprozess gebildet werden.

Der Gehäusemantel **101b** des zylindrischen Gehäusebechers **101** weist unterhalb des kreisrunden Öffnungsrandes **101c** eine durch radialen Einzug gebildete, in den Innenraum weisende umlaufende Nase **101d** auf. Diese dient als Positionierungsmittel für die Deckelscheibe **102.** Der Rand **102a** der Deckelscheibe **102** sitzt dann mitsamt dem darauf aufgezogenen Dichtungselement **108b** auf der Nase **101d** auf.

Der kreisrunde Öffnungsrand **101c** des Gehäusebechers **101** ist über den Rand **102a** der Deckelscheibe **102** radial nach innen umgebogen, so dass der Durchmesser der von ihm definierten Öffnung kleiner ist als der Durchmesser der Deckelscheibe **102.** Die auf der Nase **101d** aufsitzende Deckelscheibe **102** wird mitsamt dem darauf aufgezogenen Dichtungselement **108b** durch den radial nach innen umgebogenen Öffnungsrand **101c** auf die Nase **101d** gedrückt und fixiert.

## Patentansprüche

1. Lithium-Zelle (100) mit den folgenden Merkmalen
a. Die Zelle umfasst eine als Hohlzylinder ausgebildete, einen Hohlraum (104) definierende positive Elektrode (103),
b. Die Zelle umfasst eine in dem Hohlraum (104) angeordnete negative Elektrode (105),
c. Die Zelle umfasst einen zwischen den Elektroden (103) und (105) angeordneten Separator (106),
d. Die Zelle umfasst einen flüssigen Elektrolyten, mit dem die Elektroden (103) und (105) und der Separator (106) getränkt sind,
e. Die Zelle umfasst ein Gehäuse, das einen Innenraum umschließt, in dem die positive Elektrode (103) samt der in dem Hohlraum (104) angeordneten negativen Elektrode (105) und dem Separator (106) angeordnet sind,
f. Das Gehäuse umfasst einen Gehäusebecher (101), eine Deckelscheibe (102) und ein elektrisch isolierendes, ringförmiges Dichtungselement (108b),
g. Der Gehäusebecher (101) ist zylindrisch ausgebildet und weist einen stirnseitigen Becherboden (101a), einen umlaufenden Gehäusemantel (101b) und eine dem Gehäuseboden (101a) gegenüberliegende stirnseitige, kreisrunde Öffnung, welche von einem kreisrunden Öffnungsrand (101c) gebildet ist, auf,
h. Die Deckelscheibe (102) ist kreisrund ausgebildet, weist einen umlaufenden Rand (102a) auf und verschließt die kreisrunde Öffnung,
i. Die Zelle umfasst einen stiftförmigen Stromableiter (107) für die negative Elektrode (105). sowie den zusätzlichen Merkmalen
j. Das Dichtungselement (108b) ist auf den Rand der Deckelscheibe (102) aufgezogen und isoliert die Deckelscheibe (102) und den Gehäusebecher (101) voneinander und
k. Der stiftförmige Stromableiter (107) ist mit der Deckelscheibe (102) elektrisch verbunden.

2. Zelle nach Anspruch 1 mit mindestens einem der folgenden zusätzlichen Merkmale:
a. Der stiftförmige Stromableiter (107) ist mit der Deckelscheibe (102) verschweißt.
b. Die Deckelscheibe (102) weist eine Durchbrechung auf, durch welche der stiftförmige Stromableiter (107) hindurchgeführt ist.
c. Die Deckelscheibe (102) und der stiftförmige Stromableiter (107) sind über eine ringförmige Schweißlinie miteinander verbunden, die um den Stromableiter (107) herumgeführt ist.

3. Zelle nach Anspruch 1 oder nach Anspruch 2 mit mindestens einem der folgenden zusätzlichen Merkmale:
a. Der Gehäusemantel (101b) des zylindrischen Gehäusebechers weist eine durch radialen Einzug gebildete, in den Innenraum weisende umlaufende Nase (101d) auf.
b. Der Rand (102a) der Deckelscheibe (102) sitzt mitsamt dem ringförmigen Dichtungselement (108b) auf der Nase (101d) auf.
c. Der kreisrunde Öffnungsrand des Gehäusebechers (101) ist über den Rand (102a) der Deckelscheibe (102) radial nach innen umgelegt, so dass der Durchmesser der von ihm definierten Öffnung kleiner ist als der Durchmesser der Deckelscheibe (102).

4. Zelle nach einem der vorhergehenden Ansprüche mit mindestens einem derfolgenden zusätzlichen Merkmale:
a. Der stiftförmige Stromableiter (107) weist einen ersten, endständigen Abschnitt (107b) auf, der vollständig in der negativen Elektrode (105) versenkt ist.
b. Der stiftförmige Stromableiter (107) weist einen zweiten Abschnitt (107c) auf, der nicht in unmittelbarem Kontakt mit der negativen Elektrode (105) steht.
c. Die Zelle umfasst ein Isolatorelement (108a), das den zweiten Abschnitt (107c) zumindest bereichsweise vor unmittelbarem Kontakt mit dem Elektrolyten schützt.

5. Zelle nach einem der vorhergehenden Ansprüche mit mindestens einem der zusätzlichen Merkmale:
a. Der Separator (106) ist als geschlossenes Behältnis ausgebildet, das die negative Elektrode (105) vollständig umschließt und lediglich eine Durchbrechung für den ersten Stromableiter (107) aufweist.
b. Der Separator (106) ist mit dem Isolatorelement (108a) durch Verschweißung oder Verklebung verbunden.

6. Zelle nach einem der Ansprüche 4 oder 5 mit mindestens einem der zusätzlichen Merkmale:
a. Die Zelle umfasst ein einstückiges Kunststoffteil (108), das sowohl die Funktion des Isolatorelements (108a) als auch die Funktion des elektrisch isolierenden Dichtungselements (108b) erfüllt.

7. Verfahren zur Herstellung einer Lithium-Zelle (100) mit den folgenden Schritten:
a. Bereitstellung einer vormontierten positiven Baugruppe umfassend
- einen zylindrisch ausgebildeten Gehäusebecher (101) mit einem stirnseitigen Becherboden (101a), einem umlaufenden Gehäusemantel (101b) und einer dem Gehäuseboden (101a) gegenüberliegenden stirnseitigen, kreisrunden Öffnung, welche von einem kreisrunden Öffnungsrand (101c) gebildet ist, und
- eine als Hohlzylinder ausgebildete, einen Hohlraum (104) definierende positive Elektrode (103), die in dem Gehäusebecher (101) angeordnet ist.
b. Bereitstellung einer vormontierten negativen Baugruppe umfassend
- eine kreisrund ausgebildete Deckelscheibe (102) mit einem umlaufenden Rand (102a),
- eine negative Elektrode (105),
- einen Separator (106), der die negative Elektrode (105) umschließt,
- einen stiftförmigen Stromableiter (107) für die negative Elektrode (105), der einen endständigen Abschnitt (107b) aufweist, der vollständig in der negativen Elektrode (105) versenkt ist, und der mit der Deckelscheibe (102) elektrisch verbunden ist, und
- ein ringförmiges, elektrisch isolierendes Dichtungselement (108b), das auf den Rand (102a) der Deckelscheibe (102) aufgezogen ist.
c. Befüllen des Gehäusebechers (101) mit einem flüssigen Elektrolyten.
d. Einschieben der vormontierten negativen Baugruppe in die positive Baugruppe, so dass die negative Elektrode (105) in dem von der positiven Elektrode (103) definierten Hohlraum (104) positioniert wird.
e: Verschließen der Zelle mittels eines Bördelprozesses.

## Claims

1. Lithium cell (100) having the following features
a. the cell comprises a positive electrode (103) which is in the form of a hollow cylinder and defines a hollow space (104),
b. the cell comprises a negative electrode (105) which is arranged in the hollow space (104),
c. the cell comprises a separator (106) which is arranged between the electrodes (103) and (105),
d. the cell comprises a liquid electrolyte with which the electrodes (103) and (105) and the separator (106) are impregnated,
e. the cell comprises a housing which surrounds an interior space in which the positive electrode (103) together with the negative electrode (105), which is arranged in the hollow space (104), and the separator (106) are arranged,
f. the housing comprises a housing cup (101), a cover plate (102) and an electrically insulating, annular sealing element (108b),
g. the housing cup (101) is of cylindrical design and has an end-side cup base (101a), a circumferential housing casing (101b) and an end-side, round opening which is situated opposite the housing base (101a) and is formed by a round opening edge (101c),
h. the cover plate (102) is of round design, has a circumferential edge (102a) and closes the round opening,
i. the cell comprises a pin-like current collector (107) for the negative electrode (105)
and the additional features
j. the sealing element (108b) is fitted onto the edge of the cover plate (102) and insulates the cover plate (102) and the housing cup (101) from one another, and
k. the pin-like current collector (107) is electrically connected to the cover plate (102).

2. Cell according to Claim 1 having at least one of the following additional features:
a. The pin-like current collector (107) is welded to the cover plate (102).
b. The cover plate (102) has an aperture through which the pin-like current collector (107) is guided.
c. The cover plate (102) and the pin-like current collector (107) are connected to one another by means of an annular welding line which is guided around the current collector (107).

3. Cell according to Claim 1 or according to Claim 2, having at least one of the following additional features :
a. The housing casing (101b) of the cylindrical housing cup has a circumferential lug (101d) which is formed by radial drawing-in and faces the interior space.
b. The edge (102a) of the cover plate (102) is seated, together with the annular sealing element (108b), on the lug (101d).
c. The round opening edge of the housing cup (101) is placed radially inward over the edge (102a) of the cover plate (102), so that the diameter of the opening which is defined by the said opening edge is smaller than the diameter of the cover plate (102).

4. Cell according to one of the preceding claims, having at least one of the following additional features:
a. The pin-like current collector (107) has a first, terminal section (107b) which is completely recessed in the negative electrode (105).
b. The pin-like current collector (107) has a second section (107c) which is not in direct contact with the negative electrode (105).
c. The cell comprises an insulator element (108a) which protects the second section (107c), at least in regions, from direct contact with the electrolyte.

5. Cell according to one of the preceding claims, having at least one of the additional features:
a. The separator (106) is in the form of a closed container which completely surrounds the negative electrode (105) and has only one aperture for the first current collector (107).
b. The separator (106) is connected to the insulator element (108a) by welding or adhesive bonding.

6. Cell according to either of Claims 4 and 5, having at least one of the additional features:
a. The cell comprises an integral plastic part (108) which fulfils both the function of the insulator element (108a) and the function of the electrically insulating sealing element (108b).

7. Method for producing a lithium cell (100) comprising the following steps:
a. Providing a preassembled positive unit comprising
- a cylindrical housing cup (101) with an end-side cup base (101a), a circumferential housing casing (101b) and an end-side, round opening which is situated opposite the housing base (101a) and is formed by a round opening edge (101c), and
- a positive electrode (103) which is in the form of a hollow cylinder, defines a hollow space (104) and is arranged in the housing cup (101).
b. Providing a preassembled negative unit comprising
- a round cover plate (102) with a circumferential edge (102a),
- a negative electrode (105),
- a separator (106) which surrounds the negative electrode (105),
- a pin-like current collector (107) for the negative electrode (105), which current collector has a terminal section (107b) which is completely recessed in the negative electrode (105) and which current collector is electrically connected to the cover plate (102), and
- an annular, electrically insulating sealing element (108b) which is fitted onto the edge (102a) of the cover plate (102).
c. Filling the housing cup (101) with a liquid electrolyte.
d. Inserting the preassembled negative unit into the positive unit, so that the negative electrode (105) is positioned in the hollow space (104) which is defined by the positive electrode (103).
e: Closing the cell by means of a flanging process.

## Revendications

1. Cellule (100) au lithium présentant les caractéristiques suivantes :
a. la cellule comporte une électrode positive (103) configurée comme cylindre creux et définissant une cavité (104),
b. la cellule comporte une électrode négative (105) disposée dans la cavité (104),
c. la cellule comprend un séparateur (106) disposé entre les électrodes (103) et (105),
d. la cellule contient un électrolyte liquide dont les électrodes (103) et (105) ainsi que le séparateur (106) sont imprégnés,
e. la cellule comporte un boîtier qui entoure un espace intérieur dans lequel l'électrode positive (103) est disposée avec l'électrode négative (105) placée dans la cavité (104) et le séparateur (106),
f. le boîtier comporte un godet de boîtier (101), une plaque de couvercle (102) et un élément annulaire d'étanchéité (108b) électriquement isolant,
g. le godet de boîtier (101) a une forme cylindrique et présente un fond frontal (101a) de godet, une enveloppe périphérique de boîtier (101b) et une ouverture frontale circulaire située face au fond (101a) du boîtier et formée par un bord circulaire d'ouverture (101c),
h. la plaque du couvercle (102) a une forme circulaire, présente un bord périphérique (102a) et ferme l'ouverture circulaire,
i. la cellule comporte un évacuateur de courant (107) en forme de tige pour l'électrode négative (105), ainsi que les caractéristiques suivantes :
j. l'élément d'étanchéité (108b) est appliqué sur le bord de la plaque de couvercle (102) et isole mutuellement la plaque de couvercle (102) et le godet de boîtier (101) et
k. l'évacuateur de courant (107) en forme de tige est relié électriquement à la plaque de couvercle (102).

2. Cellule selon la revendication 1, présentant au moins l'une des caractéristiques supplémentaires suivantes :
a. l'évacuateur de courant (107) en forme de tige est soudé sur la plaque de couvercle (102),
b. la plaque de couvercle (102) présente une perforation que traverse l'évacuateur de courant (107),
c. la plaque de couvercle (102) et l'évacuateur de courant (107) sont reliés mutuellement par une ligne annulaire de soudage qui entoure l'évacuateur de courant (107).

3. Cellule selon la revendication 1 ou la revendication 2 et présentant au moins l'une des caractéristiques supplémentaires suivantes :
a. l'enveloppe (101b) du godet cylindrique de boîtier présente un bec périphérique (101d) tourné vers l'espace intérieur et formé par un retrait radial,
b. le bord périphérique (102a) de la plaque de couvercle (102) s'appuie avec l'élément d'étanchéité (108b) sur le bec (101d) et
c. le bord circulaire de l'ouverture du godet de boîtier (101) est rabattu radialement vers l'intérieur au-dessus du bord (102a) du plaque de couvercle (102) de telle sorte que le diamètre de l'ouverture qu'il définit est plus petit que le diamètre de la plaque de couvercle (102).

4. Cellule selon l'une des revendications précédentes et présentant au moins l'une des caractéristiques supplémentaires suivantes :
a. l'évacuateur de courant (107) présente une première section terminale (107b) qui est enfoncée complètement dans l'électrode négative (105),
b. l'évacuateur de courant (107) présente une deuxième section (107c) qui n'est pas en contact direct avec l'électrode négative (105) et
c. la cellule comporte un élément isolant (108a) qui protège au moins une certaine partie de la deuxième section (107c) d'un contact direct avec l'électrolyte.

5. Cellule selon l'une des revendications précédentes et présentant au moins l'une des caractéristiques supplémentaires suivantes :
a. le séparateur (106) est configuré comme récipient fermé qui entoure complètement l'électrode négative (105) et qui présente uniquement une perforation pour le premier évacuateur de courant (107),
b. le séparateur (106) est relié à l'élément isolant (108a) par soudage ou collage.

6. Cellule selon l'une des revendications 4 ou 5 et présentant au moins l'une des caractéristiques supplémentaires suivantes :
a. la cellule comporte une partie (108) en matière synthétique d'un seul tenant qui remplit à la fois la fonction de l'élément isolant (108a) et la fonction de l'élément d'étanchéité (108b) électriquement isolant.

7. Procédé de fabrication d'une cellule (100) au lithium présentant les étapes suivantes :
a. préparation d'un module positif pré-monté comportant :
un godet de boîtier (101) de forme cylindrique qui présente un fond frontal (101a) de godet, une enveloppe périphérique de boîtier (101b) et une ouverture frontale circulaire située face au fond (101a) du boîtier et formée par un bord circulaire d'ouverture (101c), et
une électrode positive (103) de forme cylindrique, définissant une cavité (104) et disposée dans le godet de boîtier (101),
b. préparation d'un module négatif pré-monté comportant :
une plaque de couvercle (102) présentant un bord périphérique (102a),
une électrode négative (105),
un séparateur (106) qui entoure l'électrode négative (105),
un évacuateur de courant (107) pour l'électrode négative (105) qui présente une première section terminale (107b) qui est enfoncée complètement dans l'électrode négative (105) et qui est raccordée électriquement à la plaque de couvercle (102) et
un élément annulaire d'étanchéité (108b) électriquement isolant appliqué sur le bord (102a) de la plaque de couvercle (102),
c. remplissage du godet de boîtier (101) par l'électrolyte liquide,
d. insertion du module négatif pré-monté dans le module positif de telle sorte que l'électrode négative (105) soit placée dans la cavité (104) définie par l'électrode positive (103) et
e. fermeture de la cellule au moyen d'une opération de rabattement du bord.
